# EUROPEAN PATENT APPLICATION

(11) **EP 2 661 993 A2**
(43) Date of publication of application: **13.11.2013**
(21) Application number: 13166119.1
(22) Date of filing: 01.05.2013
(51) Int. Cl.: A47G 19/12, B01F 7/00, B01F 13/00, B01F 11/04, B01F 15/00

(54) **Liquid condiment dispensers**

(30) Priority: 08.05.2012 GB 201208159
(71) Applicant: DKB Household UK Limited, Hampshire GU14 7UE (GB)
(72) Inventor: Junker, Lars, Hong Kong (CN)
(74) Representative: Jennings, Nigel Robin

(57) **Abstract**

A liquid condiment dispenser comprises a container (2) closed by a lid (4) and an agitator within the container. The agitator includes an elongate connector portion (18) and an agitator portion (20). One end of the connector portion (18) is connected to the agitator portion (20). The connector portion (18) is capable of pivotal movement with respect to the lid (4). The cross sectional area of the connector portion (18) transverse to its length is substantially less than that of the agitator portion (20). The agitator portion (20) includes at least one passage (22) extending through it and a weight (27) of relatively dense material, such as metal, embedded within it.

## Description

The present invention relates to liquid condiment dispensers and is concerned particularly with such dispensers for use with substantially immiscible liquids, such as oil and vinegar of salad dressing, or for use with liquids containing a solid that tends to sink to the bottom of the dispenser, such as mint sauce, or for use with liquids containing a solid flavouring material which is to be infused into the liquid.

A traditional dispenser for a salad dressing comprises a bottle or other container with a pouring lip and a removable lid or an openable dispensing valve and before the dressing is dispensed it is usual to shake the container to mix the ingredients of the dressing together. However, the mixing tends to be very superficial and the oil becomes dispersed in the vinegar in the form of relatively large globules, which means that the dispense dressing is of rather variable composition. Furthermore, the large globules of oil tend to recoalesce very rapidly and the dressing does not remain even superficially mixed for any significant period of time. Some liquid condiments include a particulate solid, such as the chopped mint leaves in mint sauce, and it is desired to dispense the condiment in the form of a uniform suspension of the solid in the liquid. This generally done by shaking the dispenser or agitating the condiment with an implement such as a spoon but the condiment which is dispensed tends to be a very variable composition. Finally, it is sometimes desired to dispense a liquid condiment into which flavouring from a sold flavouring material has been infused, such as olive oil infused with chilli flavouring from small fragments of chilli, but the infusion processes tends to be slow and inefficient due to the lack of movement or the solid flavouring material relative to the liquid.

It is therefore the object of the invention to provide a liquid condiment dispenser which will eliminate or reduce the disadvantages referred to above and can produce a much more intimate mixing of its contents and in which the mixed condition will persist longer than is usual if the dispenser if simply shaken by hand. It is a further objection of the invention to provide such a dispenser which will promote the rapid infusion of flavours from herbs, spices and the like into a liquid within the container.

According to the present invention a liquid condiment dispenser comprises a container closed by a lid and an agitator within the container, the agitator including an elongate connector portion and an agitator portion, one end of the connector portion being connected to the lid and the other end of the connector portion being connected to the agitator portion, the connector portion being capable of pivotal movement with respect to the lid, the cross sectional area of the connector portion transverse to its length being substantially less than that of the agitator portion, the agitator portion including at least one passage extending through it and a weight of relatively material embedded within.

Thus in the dispenser in accordance with the invention there is an agitator within the container which is connected to the lid to be able to perform pivotal movement with respect to it. The agitator includes a relatively slender connector portion, of which one end is connected to the lid and the other end is connected to the agitator portion whose cross section is substantially greater than that of the connector portion. At least one passage extends through the agitator portion and the agitator portion so has a weight embedded within it so as to facilitate the ability of the user to impart reciprocating pivotal motion to the agitator by applying an appropriate pattern of movement to the container. It is found that the use of such an agitator permits the salad dressing to be mixed extremely intimately such that salad dressing or the like will remain mixed for a significant period of time.

The pivotal movement of the agitator within the container may be facilitated by connecting one end of the connector portion to the lid by a hinge connection or by a ball and socket connection and it will be appreciated that the latter will permit pivotal movement in any desired vertical plane and also orbital movement around central vertical axis of the container. Alternatively, the connector portion may be connected to the lid by a fixed or rigid connection but may itself be constituted, at least in the region adjacent to the lid, by flexible material, such as silicone rubber or an elastomeric material.

Further features and details of the invention will be apparent from the following description of one specific embodiment by way of example only with reference to the accompanying drawings, in which:
Figure 1 is a partially exploded perspective view of a dispenser for salad dressing in accordance with the present invention; and

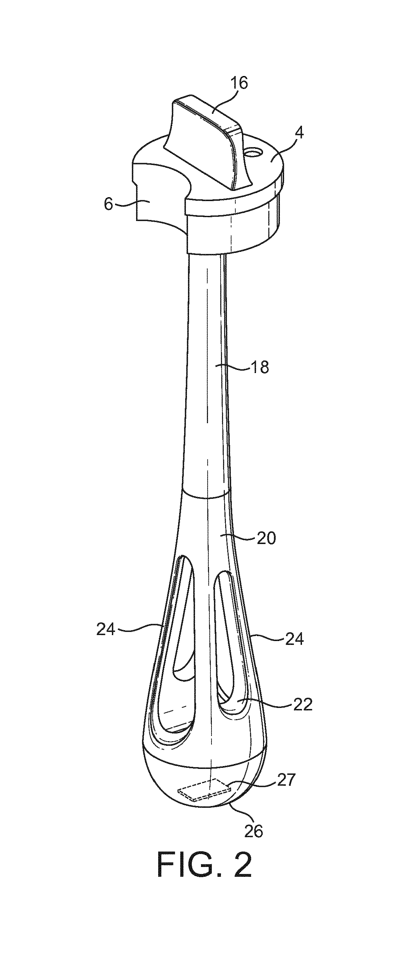

Figure 2 is a perspective view of the container lid and agitator shown in Figure 1.

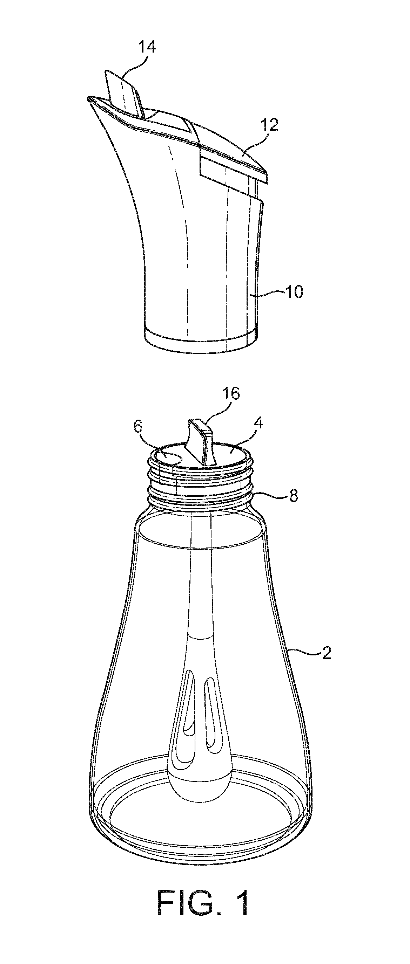

The dispenser comprises a container or bottle 2, which in this case is formed of a transparent material such as glass. The neck of the bottle is substantially closed by a stopper 4 made of plastic material or the like in which is formed a cut out or aperture 6. Formed on the exterior of the neck of the bottle 2 is an external screw thread 8, by means of which a dispensing cap 10 is normally attached to the top of the bottle. This dispensing cap 10 is shown spaced above the bottle in Figure 1 and forms no part of the present invention. However, in this case, the dispensing cap 10 includes a dispensing valve (not shown), which may be operated by means of a push button 12, and a pouring spout 14. When the push button 12 is depressed, the pouring spout 14 communicates with the cut out 6 in the stopper and the contents of the bottle 2 may be dispensed.

The stopper 4 constitutes a one piece moulding of plastic material, in this case polyolefin material, and upstanding from its upper surface is a web or gripping handle 16, which may be grasped in order to insert the stopper into the neck of the bottle or to remove it from the neck of the bottle. Depending from the geometrical centre of the lower surface of the stopper 4 is an agitator comprising an elongate connector portion 18, the upper end of which is connected to the stopper 4 and the lower end of which is connected to an agitator portion 20. The connector portion 18 is connected to the stopper 4 by virtue of the fact that the stopper 4 is moulded around the upper end of the connector portion 18, whereby it is integrally connected to it. The connector portion 18 and the agitator portion 20 constitute an integral moulding of flexible material, in this case silicone rubber, such that pivotal movement of the agitator 18, 20 with respect to the stopper 4 is possible. The connector portion 18 is in the form of a circular rod or bar with a relatively small cross sectional area but the agitator portion 20 into which it merges, is of progressively increasing cross sectional area in the downward direction. The agitator portion 20 is generally hollow and its hollow interior communicates with the exterior via a plurality, in this case four, of openings 22. These four openings 22 are opposed to one another in pairs and thus, together with the hollow cavity, thus define what might be considered to constitute two mutually perpendicular passages extending through the agitator portion. The internal cavity in the agitator portion and the apertures 22 divide the external surface of the agitator portion into four equal spaced webs 24 which connect the upper portion of the agitator portion 20 to a lower portion 26 below the cavity. Embedded in this lower portion 26 is a weight 27 (shown in chainlines) of dense material, preferably steel, which adds mass to the agitator position remote from the position of what constitutes its pivotal axis, that is to say the point at which the connector portion 18 is connected to the stopper 4.

In use, the condiment ingredients, that is to say oil and vinegar together with any other desired flavourings, such as salt, pepper, mustard and the like, are introduced into the bottle 2, whereafter the bottle is closed with the stopper 4 with the agitator extending down in to the bottle, as seen in Figure 1. The dispensing cap 10 is then applied to the bottle so as to fully seal it. When it is desired to dispense the contents of the bottle, the bottle is agitated and this results in movement of the agitator within the bottle. Such movement may be pivotal movement as a result of the bending of the connector portion 18 along its length, which is readily possible due to the flexible character of the silicon rubber material of which it is made. This will result in the agitator portion moving backwards and forwards and the turbulence caused by the presence of the openings 22 will result in intimate mixing of the immiscible liquids. In practice, it is likely that the agitator portion will impact repeatedly against the internal surface of the bottle 2 but the softness and resilience of the material surrounding the weight ensures that no damage occurs to the bottle. The plane in which the agitator oscillates may be changed as desired by altering the pattern of motion imparted to it through the bottle and this latter motion can be such that the agitator actually performs an orbital motion rather than reciprocating motion in a plane. In practice, the best results will probably be achieved by constantly changing the pattern of movement involving periods of reciprocation in different planes and periods of orbital motion. It is found in practice that the mixing that is obtained is particularly intimate, that is to say that the oil and water are broken up into very fine droplets and are effectively emulsified in a way that is simply not possible if one merely agitates the container with no moveable agitator member within it. Accordingly, once the salad dressing or the like has been agitated and thoroughly mixed, the mixed state will persist for a considerable period without further mixing being necessary, though ultimately the vinegar and oil will of course separate out again.

## Claims

1. A liquid condiment dispenser comprising a container closed by a lid and an agitator within the container, the agitator including an elongate connector portion and an agitator portion, one end of the connector portion being connected to the lid and the other end of the connector portion being connected to the agitator portion, the connector portion being capable of pivotal movement with respect to the lid, the cross sectional area of the connector portion transverse to its length being substantially less than that of the agitator portion, the agitator portion including at least one passage extending through it and a weight of relatively dense material embedded within it.

2. A dispenser as claimed in claim 1 in which the said one end of the connector portion is connected to the lid by a hinge connection or by a ball and socket connection.

3. A dispenser as claimed in claim 1 in which the connector portion comprises silicone rubber or an elastomeric material and the said one end of the connector portion is embedded in the lid.

4. A dispenser as claimed in any one of the preceding claims in which the outer surface of the agitator portion comprises resilient material.

5. A dispenser as claimed in claims 3 and 4 in which the connector portion is integral with the agitator portion and is made of the same material.

6. A dispenser as claimed in any one of the preceding claims in which two or more mutually inclined passages extend through the agitator portion.

7. A dispenser as claimed in any one of the preceding claims in which the agitator portion defines a cavity which communicates with the interior of the container through a plurality of openings.
